# FASCICULE DE BREVET EUROPEEN

(11) **EP 4 308 796 B1**
(45) Date de publication et mention de la délivrance du brevet: **02.10.2024**
(21) Numéro de dépôt: 22713709.8
(22) Date de dépôt: 09.03.2022
(51) Int. Cl.: F01D 7/02, B64C 11/38, F01D 25/16, F01D 25/18, F04D 29/36, F16H 57/04

(54) **MODULE DE SOUFFLANTE ÉQUIPÉ D'UN DISPOSITIF DE TRANSFERT D'HUILE**
FANMODUL AUSGESTATTET MIT ÖLTRANSFERVORRICHTUNG
FAN MODULE EQUIPPED WITH OIL TRANSFER DEVICE

(30) Priorité: 16.03.2021 FR 2102621
(43) Date de publication de la demande: 24.01.2024
(73) Titulaire: SAFRAN AIRCRAFT ENGINES, 75015 Paris (FR)
(72) Inventeur: FRANTZ, Caroline Marie, 77550 MOISSY-CRAMAYEL (FR); CHARIER, Gilles Alain Marie, 77550 MOISSY-CRAMAYEL (FR); MARIOT, Antoine Pierre Albert, 77550 MOISSY-CRAMAYEL (FR); MORREALE, Serge René, 77550 MOISSY-CRAMAYEL (FR); ORIOL, Sébastien, 77550 MOISSY-CRAMAYEL (FR)
(74) Mandataire: Gevers & Orès
(86) Numéro de dépôt international: PCT/FR2022/050426
(87) Numéro de publication internationale: WO 2022/195199

(56) Documents cités:
- EP-A1- 3 070 377
- EP-A1- 3 138 771
- EP-A1- 3 179 044
- WO-A1-2015/102779
- WO-A1-2020/074816
- WO-A2-2013/011225
- GB-A- 824 332
- US-A1- 2004 037 483
- US-B1- 8 484 942

## Description

### Domaine technique de l'invention

La présente invention concerne un module de soufflante pour une turbomachine d'aéronef, ce module comportant un dispositif de transfert d'huile, et un procédé d'assemblage d'un tel module de soufflante,

### Arrière-plan technique

L'arrière-plan technique comprend notamment les documents EP-A1-3 179 044, US-A1-2004/037483, EP-A1-3 138 771, WO-A2-2013/011225 et WO-A1 -2015/102779.

Une turbomachine d'aéronef comprend classiquement un générateur de gaz comportant, de l'amont vers l'aval selon le sens d'écoulement des gaz en fonctionnement, au moins un compresseur, une chambre annulaire de combustion et au moins une turbine.

Les gaz qui pénètrent dans le générateur de gaz sont comprimés dans le ou les compresseurs puis mélangés à du carburant et brûlés dans la chambre de combustion. Les gaz de combustion s'écoulent et se détendent dans la ou les turbine pour entraîner son rotor ou leurs rotors.

Dans le cas d'une turbomachine à double corps, respectivement basse pression et haute pression, le rotor de la turbine haute pression est relié par un arbre haute pression au rotor du compresseur haute pression, et le rotor de la turbine basse pression est relié par un arbre basse pression au rotor du compresseur basse pression.

La turbomachine peut être équipée d'une ou plusieurs hélices, carénées ou non carénées. Dans le cas d'une hélice carénée située à l'amont du générateur de gaz, cette hélice est appelée soufflante et est entraînée par l'arbre basse pression du générateur de gaz.

La soufflante génère un flux de gaz en fonctionnement qui se divise en un premier flux, appelé flux primaire qui s'écoule dans le générateur de gaz comme évoqué dans ce qui précède, et en un second flux, appelé flux secondaire, qui s'écoule autour du générateur de gaz.

Le taux de dilution, qui est le rapport entre le débit du flux secondaire et le débit du flux primaire, est de plus en plus important dans les turbomachines modernes, ce qui se traduit par une augmentation du diamètre de la soufflante et une diminution du diamètre du générateur de gaz.

Pour limiter la vitesse de rotation de la soufflante, en particulier des turbomachines à fort taux de dilution, il est connu d'entraîner cette soufflante par l'intermédiaire d'un réducteur en général du type à train épicycloïdal ou planétaire. L'arbre basse pression entraîne ainsi la soufflante par l'intermédiaire du réducteur.

Une soufflante, ou une hélice en général, peut comprendre des pales à calage variable, c'est-à-dire que chacune des pales a une orientation autour d'un axe radial qui peut être réglée avec précision. Les pales sont portées par un moyeu en forme d'anneau polygonal et sont déplacées en rotation autour de ces axes par l'intermédiaire d'un actionneur hydraulique commun qui est monté à l'intérieur du moyeu. Cet actionneur est alimenté en huile et peut se situer dans un repère tournant lorsqu'il est solidaire en rotation du moyeu et de la soufflante.

La turbomachine comprend un système de lubrification comportant un réservoir d'huile et une pompe, qui est en général situé dans un repère fixe. On comprend donc que l'alimentation en huile de l'actionneur depuis le système de lubrification doit se faire par un dispositif de transfert d'huile depuis un repère fixe jusqu'à un repère tournant. Un dispositif de ce type est couramment appelé OTB, acronyme de l'expression anglo-saxonne Oil *Transfer Bearing.*

Ce type de dispositif peut être monté dans une turbomachine à soufflante du type précité pour alimenter l'actionneur en huile mais aussi pour alimenter le réducteur en huile de lubrification. Ce type de dispositif peut aussi être monté dans un autre type de turbomachine, telle que par exemple une turbomachine équipée d'une hélice non carénée à pales à calage variable, du type turbopropulseur.

Dans la technique actuelle, un dispositif de transfert d'huile comprend un anneau de stator qui comporte une surface cylindrique interne et des canalisations internes d'huile qui débouchent chacune sur cette surface cylindrique interne. Ces canalisations sont reliées par des conduites au système de lubrification précité.

Le dispositif comprend en outre un arbre engagé dans l'anneau et mobile en rotation autour d'un axe à l'intérieur de cet anneau. L'arbre comporte une surface cylindrique externe s'étendant à l'intérieur de la surface cylindrique interne de l'anneau, et des canalisations internes d'huile qui débouchent chacune sur cette surface cylindrique externe. Ces canalisations sont reliées par des conduites à l'actionneur pour son alimentation en huile.

Dans la technique actuelle, la surface cylindrique externe de l'arbre comprend des rainures annulaires de logement de segments annulaires d'étanchéité. Ces segments sont aptes à se déplacer dans les rainures et sont configurés pour prendre appui radialement sur la surface interne de l'anneau pour limiter et maitriser les fuites d'huile. Les débouchés des canalisations précitées sont situés entre deux segments adjacents qui assurent donc qu'un maximum d'huile apportée par chaque canalisation de l'anneau alimente une canalisation correspondante de l'arbre. Le nombre de segments est égal au double du nombre de canalisations. Le document GB-A-824,332 décrit un dispositif de transfert d'huile de ce type.

Cependant, cette technologie n'est pas satisfaisante pour plusieurs raisons. Les tolérances de fabrication et de montage des pièces font qu'il est difficile de maitriser précisément ces fuites. Le dispositif comprend de nombreuses pièces, ce qui complexifie le montage. La fabrication et l'assemblage d'un tel dispositif sont donc relativement longs et coûteux. Par ailleurs, plus le nombre de canalisations du dispositif est important et plus le nombre de segments d'étanchéité est important et plus la dimension axiale et donc l'encombrement axial du dispositif sont importants pour pouvoir monter ces différents segments. Un dispositif de transfert d'huile peut être complexe à intégrer dans une turbomachine du fait de son encombrement. Enfin, la durée de vie d'un tel dispositif est en général limitée du fait de désalignements potentiels entre l'arbre et l'anneau en fonctionnement et de l'usure des segments d'étanchéité qui peut être accentuée par ces désalignements ainsi que par la vitesse de rotation de l'arbre. Plus le diamètre du dispositif est important, et plus la vitesse périphérique de l'arbre et l'usure des segments sont importantes.

L'invention propose ainsi un dispositif de transfert d'huile perfectionné qui résout tout ou partie des problèmes de la technique antérieure.

### Résumé de l'invention

L'invention concerne un module de soufflante pour une turbomachine d'aéronef, ce module comportant une soufflante qui comporte un arbre de soufflante et des aubes de soufflante à calage variable, et un dispositif de transfert d'huile qui est configuré pour assurer un transfert d'huile entre un stator et un actionneur qui est solidaire en rotation de l'arbre de soufflante et qui est configuré pour contrôler le calage des aubes de soufflante, ce dispositif comportant :
- un anneau de stator comportant une surface cylindrique interne et des canalisations internes d'huile qui débouchent chacune sur ladite surface cylindrique interne,
- un arbre engagé dans ledit anneau de stator et mobile en rotation autour d'un axe à l'intérieur de cet anneau, l'arbre comportant une surface cylindrique externe s'étendant à l'intérieur de ladite surface cylindrique interne, l'arbre comportant des canalisations internes d'huile qui débouchent chacune sur ladite surface cylindrique externe,
caractérisé en ce que lesdites surfaces cylindriques interne et externe définissent entre elles un espace annulaire qui a une épaisseur radiale comprise entre 10 et 30µm pour la formation d'un palier lisse, ce palier lisse s'étendant sur toute l'étendue axiale de ces surfaces et étant dépourvu d'organes d'étanchéité, et en ce que deux paliers à roulement sont montés entre l'anneau et l'arbre, un palier à roulement de chaque côté du palier lisse, chaque palier à roulement comportant deux bagues entre lesquelles sont situés des éléments roulants, chaque palier à roulement étant monté serré en direction radiale entre l'anneau et l'arbre. L'invention propose ainsi un dispositif de transfert d'huile dépourvu d'organes ou de segments d'étanchéité entre les surfaces cylindriques en regard de l'anneau de stator et de l'arbre. Ces surfaces définissent entre elles un palier lisse dont l'épaisseur radiale est maîtrisée avec précision. Des paliers à roulement sont montés de part et d'autre de ce palier lisse et sont montés serrés de façon à garantir l'épaisseur radiale du palier lisse, quels que soient le régime de la turbomachine et la vitesse périphérique de l'arbre du dispositif de transfert.

Dans la présente demande, on entend par « monté serré », d'une part le fait qu'il n'y a pas de jeu en fonctionnement entre les pièces et d'autre part le fait qu'il existe un jeu négatif avant montage entre les pièces. Le montage serré des paliers entre l'anneau et l'arbre peut résulter du montage serré des bagues entre l'anneau et l'arbre, et/ou du montage serré des éléments roulants entre les bagues. La bague interne de chaque palier peut ainsi être monté serré sur l'arbre et la bague externe de chaque palier peut ainsi être monté serré dans l'anneau. Les éléments roulants peuvent en outre être montés serrés entre les bagues de chaque palier. Les paliers à roulement sont donc montés avec une précontrainte radiale entre l'anneau et l'arbre. Les paliers à roulement sont automatiquement lubrifiés par l'huile qui fuit du palier lisse en fonctionnement. Les paliers à roulement assurent en outre la limitation des fuites d'huile à l'extérieur du palier lisse et du dispositif. Les paliers à roulement permettent en outre de supprimer les risques de désalignements entre l'anneau et l'arbre et donc les risques de contact entre eux et d'usure. Les segments d'étanchéité ne constituent donc plus des pièces d'usure du dispositif qui a donc une durée de vie optimisée par rapport à la technique antérieure.

Le module selon l'invention peut comprendre une ou plusieurs des caractéristiques suivantes, prises isolément les unes des autres, ou en combinaison les unes avec les autres :
- les paliers à roulement sont à rouleaux,
- l'arbre et l'anneau comportent chacun au moins trois ou quatre canalisations alignées les unes derrière les autres le long dudit axe,
- chacune des canalisations débouche dans une gorge annulaire située sur ladite surface cylindrique interne ou externe,
- lesdits orifices ou lesdites gorges sont situés à une distance axiale les uns des autres ou les unes des autres comprise entre 15 et 35mm,
- une frette est montée à l'intérieur de l'anneau et définie ladite surface interne,
- les paliers à roulement ont des diamètres moyens identiques ; dans la présente demande, on entend par diamètre moyen, la moyen entre un diamètre externe maximal et un diamètre interne minimal d'une pièce ou d'un ensemble de pièces,
- les paliers à roulement ont des diamètres moyens supérieurs au diamètre du palier lisse,
- les bagues des paliers à roulement ont des diamètres internes identiques,
- la soufflante est entrainée en rotation par un réducteur, ledit dispositif étant monté en aval du réducteur et étant configuré pour alimenter en huile le réducteur ainsi que l'actionneur par des conduites traversant le réducteur,

-- le réducteur est du type épicycloïdal, c'est-à-dire à porte-satellites mobile en rotation et donc à couronne immobile en rotation,
-- le dispositif alimente le réducteur en huile de lubrification, et en particulier au moins une partie de ses paliers et dentures,
-- les conduites traversent un porte-satellites du réducteur,
-- le dispositif est monté autour d'un arbre d'entrée du réducteur,
-- l'arbre d'entrée du réducteur a un diamètre compris entre 30 mm et 200mm, plus particulièrement inférieur à 150mm et/ou supérieur à 100m,
-- l'arbre d'entrée du réducteur est configuré pour tourner à une vitesse périphérique comprise entre 1 et 20m/s, et de préférence entre 7 et 15m/s,
-- le dispositif est configuré pour alimenter l'actionneur à une pression d'huile comprise entre 2 et 200 bars, et de préférence entre 5 et 130 bars,
-- le dispositif est configuré pour alimenter le réducteur à une pression d'huile comprise entre 2 et 50 bars, et de préférence entre 5 et 20 bars,
-- l'arbre du dispositif est solidaire en rotation du pote-satellites du réducteur,
-- l'anneau du dispositif est fixé à un stator de la turbomachine par un support annulaire présentant une certaine souplesse en fonctionnement, cette souplesse pouvant être obtenue grâce à des orifices traversants et/ou une forme particulière en section axiale de ce support.

L'invention concerne également une turbomachine d'aéronef, comportant un module tel que décrit ci-dessus.

L'invention concerne également un procédé d'assemblage d'un module tel que décrit ci-dessus, comprenant les étapes de :
a) montage de l'anneau sur l'arbre du dispositif,
b) fixation de l'arbre du dispositif à un porte-satellites du réducteur, et
d) déplacement en translation du réducteur et du dispositif vers le stator.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une demi vue schématique en coupe axiale d'une turbomachine équipée d'un dispositif de transfert d'huile,
[Fig.2] la figure 2 est une vue à plus grande échelle d'une partie de la figure 1,
[Fig.3] la figure 3 est une vue schématique en perspective d'un dispositif de transfert d'huile selon la technique antérieure,
[Fig.4] la figure 4 est une vue schématique en coupe axiale du dispositif de la figure 3,
[Fig.5] la figure 5 est une vue à plus grande échelle d'une partie de la figure 4,
[Fig.6] la figure 6 est une demi vue schématique en coupe axiale d'une turbomachine équipée d'un dispositif de transfert d'huile selon l'invention, [Fig.7] la figure 7 est une vue à plus grande échelle d'une partie de la figure 6,
[Fig.8] la figure 8 est une demi vue schématique en coupe axiale d'une turbomachine équipée d'une variante de réalisation d'un dispositif de transfert d'huile selon l'invention, et
[Fig.9] la figure 9 est une vue à plus grande échelle du dispositif de la figure 8.

### Description détaillée de l'invention

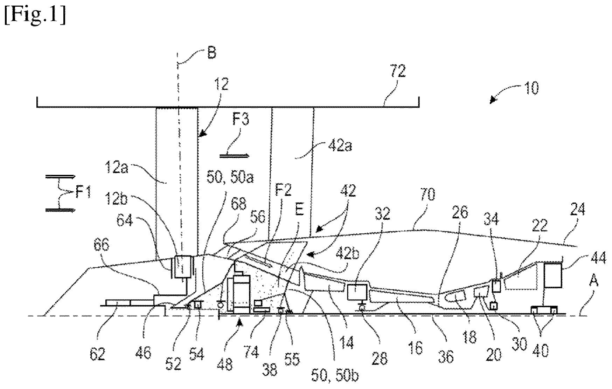

La figure 1 montre une turbomachine 10 qui comporte, de manière classique, une soufflante 12, un compresseur basse pression (BP) 14, un compresseur haute pression (HP) 16, une chambre annulaire de combustion 18, une turbine haute pression (HP) 20, une turbine basse pression (BP) 22 et une tuyère d'échappement 24.

Les rotors du compresseur haute pression 16 et de la turbine haute pression 20 sont reliés entre eux par un arbre haute pression 26 et forment avec lui un corps haute pression (HP) qui est guidé en rotation autour de l'axe A longitudinal de la turbomachine par des paliers à roulements 28, 30. Un premier palier 28 est monté entre une extrémité amont de l'arbre 26 et du corps HP et un carter inter compresseur 32 situé entre les compresseurs BP 14 et HP 16. Un second palier 30 est monté entre une extrémité aval de l'arbre 26 et du corps HP et un carter inter turbine 34 situé entre les turbines BP 22 et HP 20.

Les rotors du compresseur BP 14 et de la turbine BP 22 sont reliés entre eux par un arbre basse pression 36 et forment avec lui un corps basse pression (BP) qui est guidé en rotation autour de l'axe A longitudinal de la turbomachine par des paliers à roulements 38, 40. Au moins un palier 38 est monté entre une extrémité amont de l'arbre 36 du corps BP et un carter d'entrée 42 situé en amont du compresseur BP 14. D'autres paliers 40 sont montés entre une extrémité aval de l'arbre 36 du corps BP et un carter d'échappement 44 situé en aval de la turbine BP 22.

La soufflante 12 est entraînée par un arbre de soufflante 46 qui est entrainé par l'arbre BP 36 au moyen d'un réducteur 48. Ce réducteur 48 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 48 est positionné dans la partie amont de la turbomachine. Une structure fixe comportant schématiquement, ici, une partie amont 50a et une partie aval 50b qui compose le carter moteur ou stator 50 est agencée de manière à former une enceinte E entourant le réducteur 48. Cette enceinte E est ici fermée en amont par une étanchéité 52 au niveau d'un palier 54 permettant la traversée de l'arbre de soufflante 46, et en aval par une étanchéité 55 au niveau du palier 38 permettant la traversée de l'arbre BP 36.

L'enceinte E est disposée à l'intérieur du carter d'entrée 42 qui est situé entre un aubage redresseur d'entrée 56 et le compresseur BP 14.

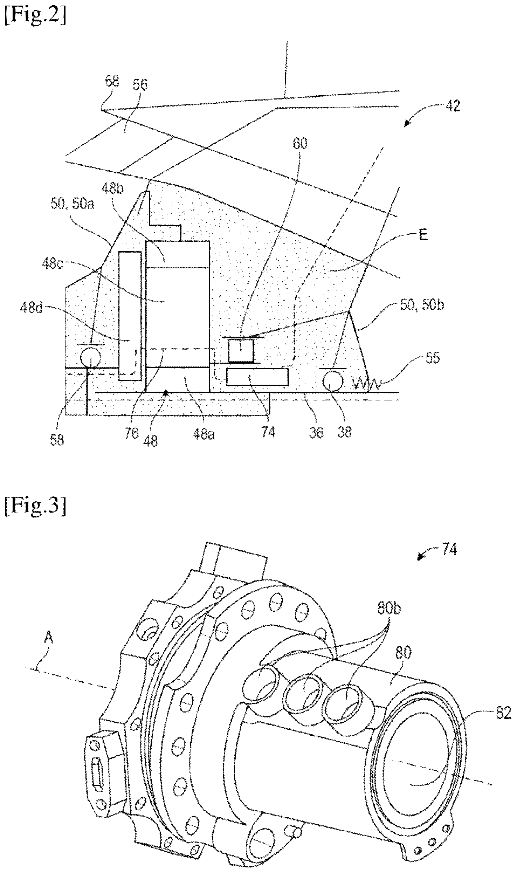

La figure 2 montre le réducteur 48 à plus grande échelle.

Le réducteur 48 comprend un solaire 48a centré sur l'axe A et accouplé à l'arbre BP 36 par exemple par l'intermédiaire de cannelures.

Le réducteur 48 comprend une couronne 48b qui est également centrée sur l'axe A et fixée au carter d'entrée 42.

Le réducteur 48 comprend enfin des satellites 48c qui sont disposés autour de l'axe A et engrenés avec le solaire 48a et la couronne 48b. Ces satellites 48c sont portés par un porte-satellites 48d qui est mobile en rotation autour de l'axe A et est relié à l'arbre de soufflante 46 pour son entraînement en rotation. Le porte-satellites 48d est guidé par des paliers 58, 60 portés par le carter d'entrée 42, ces paliers 58, 60 étant situés respectivement en amont et en aval du réducteur 48.

La soufflante 12 de la figure 1 comprend des pales 12a à calage variable et est associée à un actionneur 62 qui permet de commander de manière centralisée le positionnement des pales 12a autour de leurs axes B, qui sont en général des axes radiaux par rapport à l'axe A de la turbomachine. Chacune des pales 12a comprend un pied 12b formant un pivot qui est logé dans un logement d'un moyeu 64 en forme d'anneau polygonal, et qui est relié par un système de liaison 66 à un piston de l'actionneur 62. L'actionneur 62 s'étend le long de l'axe A et son piston est mobile en translation le long de cet axe, par exemple depuis une première position dans laquelle les pales 12a sont en drapeau jusqu'à une seconde position dans laquelle les pales 12a obstruent le passage d'air à travers la soufflante 12. Le flux d'air F1 qui traverse la soufflante 12 est divisé en deux flux annulaires et coaxiaux en aval de la soufflante, par un séparateur annulaire 68 qui s'étend autour de l'aubage 56. Un premier flux d'air appelé flux primaire F2 s'écoule dans une veine primaire et traverse cet aubage 56 et s'écoule dans les compresseurs 14 et 16 pour être comprimé. Cet air comprimé est ensuite mélangé à du carburant puis brûlé dans la chambre de combustion 18. Les gaz de combustion sont ensuite détendus dans les turbines 20, 22 pour entraînés leurs rotors et les arbres BP 36 et HP 26, puis s'écoulent dans la tuyère 24.

Un second flux d'air appelé flux secondaire F3 s'écoule dans une veine secondaire qui est définie intérieurement par un carter annulaire de moteur 70 qui s'étend longitudinalement autour des compresseurs 14, 16, de la chambre de combustion 18 et des turbines 20, 22, et extérieurement par un carter annulaire de nacelle 72 qui s'étend longitudinalement autour de la soufflante 12 et d'une partie du moteur. Ce carter de nacelle 72 est relié au moteur par des aubes directrices de sortie 42a du carter d'entrée 42. Ces aubes directrices 42a sont structurales et sont configurées pour redresseur le flux d'air sortant de la soufflante 12.

L'actionneur 62 est hydraulique et fonctionne avec un fluide, de l'huile, qui provient d'un système de lubrification situé en général dans la nacelle ou entre les compresseurs 14, 16 et le carter 70 (c'est-à-dire dans le moteur) et donc dans un repère fixe de la turbomachine. Au contraire, l'actionneur 62 est situé dans un repère tournant.

Comme cela est visible à la figure 2, la turbomachine 10 comprend un dispositif 74 de transfert d'huile depuis le repère fixe du moteur jusqu'au repère tournant dans lequel se situe l'actionneur 62.

Dans l'exemple représenté, le dispositif 74 est situé en aval du réducteur 48 et comprend de préférence plusieurs voies 76 d'alimentation en huile pour alimenter l'actionneur 62 mais aussi pour lubrifier le réducteur 48. Le trait en pointillé de la figure 2 symbolise une de ces voies sur tout son trajet, du repère fixe à l'actionneur 62 : traversée de la veine primaire jusqu'au dispositif 74, traversée du réducteur 48 (entre ses satellites ou à travers les axes de ces satellites), et cheminement le long du porte-satellites puis de l'arbre de soufflante 46.

Les figures 3 à 5 illustrent un dispositif 74 de transfert d'huile selon la technique antérieure à la présente invention.

Le dispositif 74 comprend :
- un anneau de stator 80 comportant une surface cylindrique interne 80a et des canalisations internes 80b d'huile qui débouchent chacune sur ladite surface cylindrique interne 80a,
- un arbre 82 engagé dans l'anneau de stator 80 et mobile en rotation autour de l'axe A à l'intérieur de cet anneau 80, l'arbre 82 comportant une surface cylindrique externe 82a s'étendant à l'intérieur de la surface 80a, et des canalisations internes 82b d'huile qui débouchent chacune sur la surface 82a.

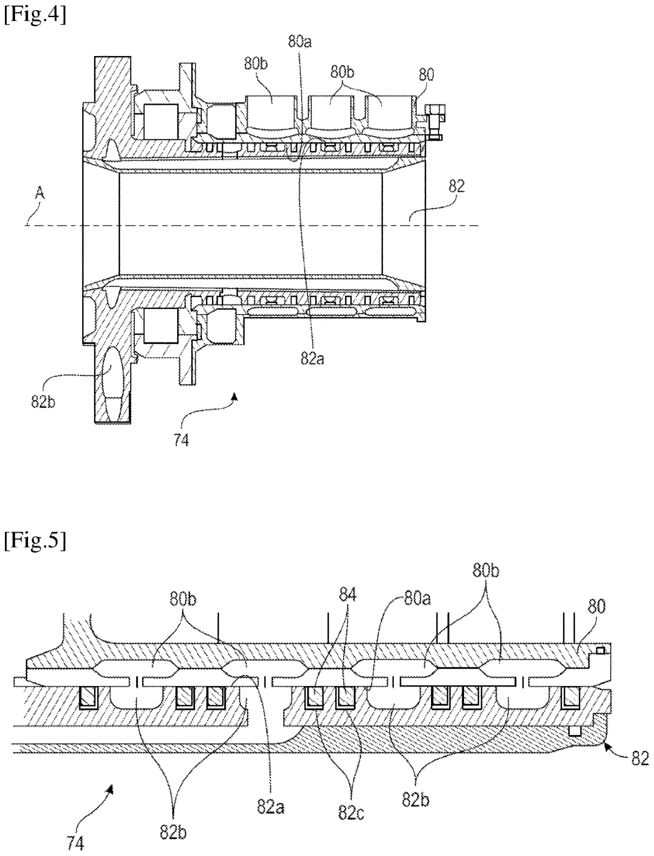

Comme cela est visible dans la vue agrandie de la figure 5, la surface 82a de l'arbre 82 comprend des rainures annulaires 82c de logement de segments annulaires d'étanchéité 84. Ces segments 84 sont aptes à se déplacer dans les rainures et sont configurés pour prendre appui radialement sur la surface interne 80a de l'anneau 80 pour limiter et maitriser les fuites d'huile. Les débouchés des canalisations 80b, 82b précitées sont situés entre deux segments 84 adjacents qui assurent donc qu'un maximum d'huile apportée par chaque canalisation 80b de l'anneau 80 alimente la canalisation 82b correspondante de l'arbre 82.

Cette technologie présente de nombreux problèmes décrits plus haut.

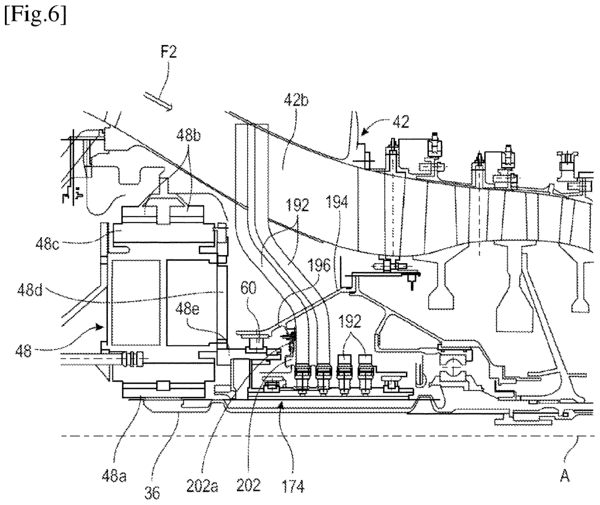

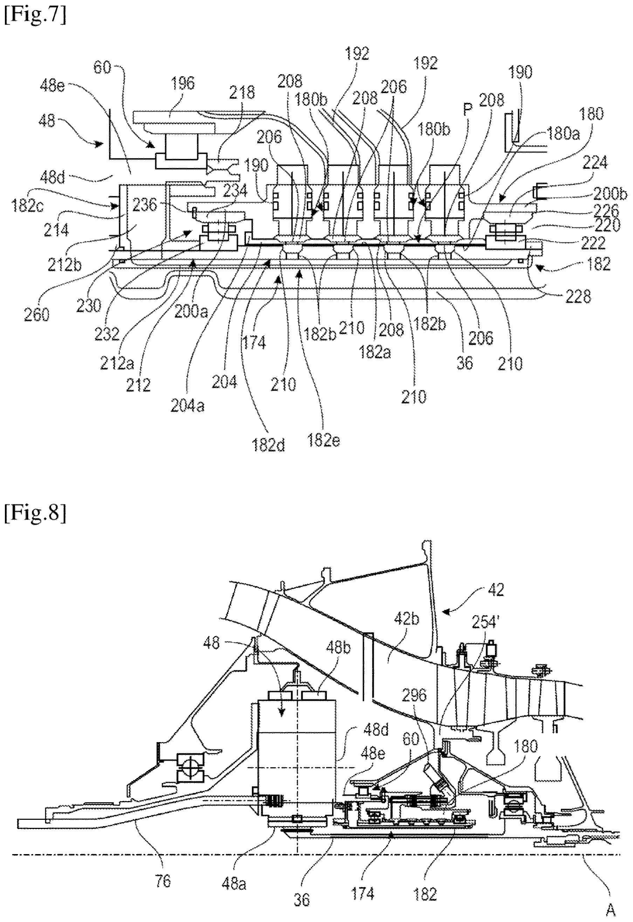

La présente invention permet de remédier à tout ou partie de ces problèmes grâce à un dispositif de transfert d'huile dont un mode de réalisation est illustré aux figures 6 et 7.

Les chiffres de référence utilisés dans ce qui précède pour désigner certains éléments sont repris dans la description qui suit et dans les figures 6 et 7 dans la mesure où ils désignent ces mêmes éléments.

Le dispositif 174 de transfert d'huile selon l'invention comprend également un anneau de stator 180 et un arbre 182 engagé dans l'anneau de stator 180 et mobile en rotation autour de l'axe A à l'intérieur de cet anneau 180. L'anneau 180 comporte une surface cylindrique interne 180a et des canalisations internes 180b d'huile qui débouchent chacune sur la surface 180a. Les canalisations 180b ont toutes une orientation radiale et sont disposées les unes derrière les autres le long de l'axe A. Elles sont au nombre de quatre dans l'exemple représenté.

Bien que les canalisations 180b soient ici représentées dans un même plan axial, elles pourraient être situées respectivement dans des plans axiaux différents. Cela dépend notamment des conduites 192 auxquelles elles sont reliées et des bras 42b à travers lesquels transitent ces conduites. Dans encore une autre variante, les canalisations 180b pourraient comprendre des extrémités radialement externes situées dans un même plan axial et des extrémités réparties angulairement autour de l'axe A et débouchant sur la surface 180a.

Chacune des canalisations 180b comprend une extrémité radialement interne qui forme le débouché précité et une extrémité radialement externe qui forme un port 190 de raccordement à une conduite d'huile 192. Le port 190 forme une partie femelle et une extrémité de la conduite 192 forme une partie mâle engagée de manière étanche dans le port 190. Parmi les conduites 192 raccordées à l'anneau 180, deux sont représentées. Ces conduites 192 s'étendent radialement, d'abord à travers des ouvertures 194 d'un support annulaire 196 du palier 60, et d'autre part à travers des bras tubulaires 42b du carter d'entrée 42 qui sont situés dans la veine d'écoulement du flux primaire F2. Ces conduites 192 vont ensuite traverser les aubes directrices 42a qui sont situées dans la veine d'écoulement du flux secondaire F3, pour rejoindre le système de lubrification situé dans la nacelle. Une alternative consiste à monter le système de lubrification dans le moteur (entre la veine primaire - compresseurs 14 et 16) et le carter 70 de la veine secondaire), de façon à ce que ces conduites 192 ne traversent pas le flux secondaire F3.

L'anneau 180 a une forme générale cylindrique et comprend un rebord cylindrique amont 200a et un rebord cylindrique aval 200b. Ces rebords 200a, 200b ont des diamètres identiques ou similaires.

Comme cela est visible à la figure 6, l'anneau 180 peut être relié par un dispositif de retenue axiale à un stator et par exemple au support de palier 196. Dans l'exemple représenté, ce dispositif comprend un disque 202 située à l'amont de l'anneau 180 et s'étendant radialement vers l'extérieur. Ce disque 202 a sa périphérie externe qui est engagée dans une pince annulaire 2020 portée par le support de palier 196. En fonctionnement, le disque 202 est apte à coulisser en direction circonférentielle à l'intérieur de la pince 202a, et est en appui axial vers l'amont et vers l'aval sur les deux mors de cette pince 202a, situés respectivement à l'amont et à l'aval. La figure 7 montre qu'une frette 204 peut être fixée à l'intérieur de l'anneau 180 de façon à définir sa surface 180a. Cette frette 204 s'étend sur une majeure partie de la longueur de l'anneau 180 et comprend un rebord annulaire 204a radialement externe à son extrémité amont qui est en appui axial sur une portée cylindrique de l'anneau 180. Comme son nom l'indique, la frette 204 est montée par frettage dans l'anneau 180. Le frettage associé à l'appui de son rebord 204a assure l'immobilisation de la frette 204 vis-à-vis de l'anneau 180.

La frette 204 comprend une rangée annulaire d'orifices radiaux 206 au droit de chacune des canalisations 180b. Par ailleurs, une gorge annulaire 208 est formée à la périphérie interne de l'anneau 180 et au droit de chacune des canalisations 180b, cette gorge 208 étant fermée à l'intérieur par la frette 204. On comprend donc que chaque canalisation 180b alimente une gorge 208 et que chaque gorge 208 distribue de l'huile aux orifices 206 de la frette 204.

L'arbre 182 comporte une surface cylindrique externe 182a s'étendant à l'intérieur de la surface 180a et des canalisations internes 182b d'huile qui débouchent chacune sur la surface 182a. Les canalisations 182b ont toutes une orientation radiale et sont disposées les unes derrière les autres le long de l'axe A. Elles sont au nombre de quatre dans l'exemple représenté. Une gorge annulaire 210 est formée à la périphérie externe de l'arbre 182 et au droit de chacune des canalisations 182b.

Chacune des canalisations 182b est reliée à une conduite 212 qui peut être intégrée à l'arbre 182. L'une de ces conduites 212, visible en section dans les figures, comprend une portion annulaire 212a qui s'étend autour de l'axe A et le long d'une majeure partie de la longueur de l'arbre 182. L'extrémité aval de cette portion 212a est reliée à la canalisation 182b la plus aval de l'arbre, et son extrémité amont est reliée à une portion radiale 212b qui est formée dans une nervure annulaire amont 214 de l'arbre.

Cette nervure 214 sert à la fixation de l'arbre 182 du dispositif 174. Dans l'exemple représenté, l'arbre 182 du dispositif 174 est fixé au porte-satellites 48d du réducteur 48. Le porte-satellites 48d comprend un rebord cylindrique aval 48e sur la périphérique externe duquel est monté le palier 60, et à la périphérie interne duquel est engagé la nervure 214. Cette nervure 214 prend appui axialement vers l'amont sur une portée cylindrique du rebord 48e et est maintenue en appui axial contre cette portée par un écrou 216 vissé depuis l'aval sur la périphérie interne du rebord 48e.

Le palier 60 est ici à roulement et comprend des rouleaux qui sont disposés entre deux bagues, respectivement interne et externe, la bague interne étant serrée axialement contre une autre portée cylindrique de la périphérie externe du rebord 48e par un écrou 218 vissé depuis l'aval sur cette périphérie.

Un premier palier à roulement 220 est monté entre le rebord 200b de l'anneau 180 et l'extrémité aval de l'arbre 182.

Le palier 220 est ici à roulement et comprend des rouleaux qui sont disposés entre deux bagues, respectivement interne 222 et externe 224. La bague externe 224 est montée, de préférence serrée en direction radiale, à l'intérieur du rebord 200b est en appui axial sur une portée cylindrique de la périphérie interne du rebord 200b, situé à l'amont. A l'aval, la bague 224 est retenue axialement par un jonc annulaire 226 fendu engagé dans une rainure annulaire de la périphérie interne du rebord 200b.

La bague interne 222 est montée, de préférence serrée en direction radiale, sur l'extrémité aval de l'arbre 182 et est en appui axial sur une portée cylindrique de l'arbre, situé à l'amont. A l'aval, la bague 222 est retenue axialement par une frette 228 fixée sur la périphérie externe de l'extrémité aval de l'arbre 182. Les rouleaux sont de préférence montés serrés radialement entre les bagues 222, 224.

Un second palier à roulement 230 est monté entre le rebord 200a de l'anneau 180 et l'arbre 182.

Le palier 230 est ici à roulement et comprend des rouleaux qui sont disposés entre deux bagues, respectivement interne 232 et externe 234. Les rouleaux sont montés de préférence serrés radialement entre les bagues 232, 234. La bague externe 234 est montée, de préférence serrée en direction radiale, à l'intérieur du rebord 200a et est en appui axial sur une portée cylindrique de la périphérie interne du rebord 200a, situé à l'aval. A l'amont, la bague 232 est, de préférence serrée en direction radiale, et retenue axialement par un jonc annulaire 236 fendu engagé dans une rainure annulaire de la périphérie interne du rebord 200a.

La bague interne 232 est montée sur une partie de l'arbre 182 située entre la nervure 214 et les canalisations 182b. Cette bague 232 est en appui axial sur une portée cylindrique de l'arbre 182, situé à l'aval. A l'amont, la bague 232 est retenue axialement par une pièce annulaire 182c de l'arbre qui comporte la nervure 214 et qui est engagée sur une autre pièce 182d de l'arbre comportant les canalisations 182b. La pièce 182c comportant la nervure 214 est serrée axialement contre la bague interne 232 du palier 230 par un écrou 260 vissé à l'extrémité amont de l'arbre 182 et en particulier de la pièce 182d.

Dans l'exemple représenté, en plus des pièces 182c et 182d, l'arbre 182 comprend une autre pièce annulaire 182e qui s'étend sur toute la longueur de la pièce 182d, à l'intérieur de celle-ci, et qui définit la conduite 212 avec cette pièce 182d. La pièce 182e porte un joint d'étanchéité à chacune de ses extrémités axiales, qui est destiné à coopérer avec la périphérie interne de la pièce 182d.

Comme le dispositif 174 comprend deux paliers à rouleaux 220, 230, il n'y a pas d'arrêt axial entre l'arbre 182 et l'anneau 180 du dispositif. Le disque 202 et la pince 202a décrits dans ce qui précède assurent la retenue axiale de l'anneau 180 sur l'arbre 182 correspondance axiale.

La figure 6 permet de constater que l'arbre 182 s'étend autour de l'arbre BP 36 dont l'extrémité amont est accouplée au solaire 48a du réducteur 48 par les cannelures précitées.

L'arbre BP 36 forme ainsi l'arbre d'entrée du réducteur 48. Cet arbre 36 a un diamètre compris entre 30 mm et 200mm, et de préférence entre 100 et 150mm. Il est configuré pour tourner à une vitesse périphérique comprise entre 1 et 20m/s, et de préférence entre 7 et 15m/s.

Selon une caractéristique de l'invention, les surfaces 180a, 182a définies dans l'exemple représenté par la frette 204, d'une part, et par l'arbre 182, d'autre part, sont espacées l'une de l'autre d'une épaisseur radiale comprise entre 10 et 30µm. Cet espace de dimension maîtrisée permet la formation d'un palier lisse P entre l'arbre 182 et l'anneau 180, sur sensiblement toute l'étendue longitudinale du dispositif 174. De manière avantageuse, le dispositif 174 est dépourvu d'organes d'étanchéité, et en particulier de segments d'étanchéité, dans cette zone.

Le palier lisse P est alimenté en huile directement par les canalisations 180b de l'anneau 180. On comprend que l'épaisseur radiale précitée de l'espace est calculée pour que des fuites maitrisées aient lieu aux interfaces entre les canalisations 180b, 182b, de façon à alimenter le palier lisse P. L'huile se répand alors sur toute l'étendue axiale du palier lisse P et jusqu'aux paliers à roulement 220, 230 en vue de leur lubrification. Le montage serré de ces paliers 220, 230 permet d'une part de garantir l'épaisseur radiale de l'espace, sans risque de désalignement de l'arbre 182 et de l'anneau 180, et d'autre part de limiter les fuites d'huile à l'extérieur du palier lisse P.

Les fuites d'un palier lisse sont proportionnelles au diamètre, au cube du jeu et au carré de l'excentrement rotor/stator (calcul de fuite dans une étanchéité hydrostatique à section annulaire). Le diamètre du palier lisse étant relativement élevé et la pression de fonctionnement étant également relativement élevée (par exemple 100-130 bars), il est donc important de bien maîtriser le jeu rotor / stator et l'excentrement du rotor en fonctionnement.

Les orifices 206 de la frette 204 sont situés à une distance axiale les uns des autres et/ou les gorges 210 de l'arbre 182 sont situées à une distance axiale les unes des autres, comprise entre 15 et 35mm.

Les paliers à roulement 220, 230 ont de préférence des diamètres moyens identiques. Ils sont de préférence identiques.

Les diamètres moyens des paliers 220, 230 sont de préférence supérieurs au diamètre du palier P.

On entend par « voie » du dispositif 174, l'association d'une canalisation 180b de l'anneau 180 avec une canalisation 182b de l'arbre 182. Dans l'exemple représenté, le dispositif 174 comprend quatre voies. De manière préférée, une des voies est utilisé pour lubrifier le réducteur 48, et en particulier au moins une partie de ses paliers et dentures. Une des voies est utilisée pour l'alimentation en huile de l'actionneur 62, et une autre des voies est utilisée pour le retour d'huile de l'actionneur 62. Enfin, la dernière voie peut être utilisée pour la protection hydraulique de l'actionneur.

Les conduites 212 reliées aux voies de l'actionneur peuvent traverser le porte-satellites 48d du réducteur 48. Dans la mesure où l'arbre 182 du dispositif 174 et les conduites 212 sont dans le repère tournant avec le porte-satellites 48d, la traversée du porte-satellites 48d par ces conduites 212 ne pose pas de problème.

Le dispositif 174 est par exemple configuré pour alimenter l'actionneur 62 à une pression d'huile comprise entre 2 et 200 bars, et de préférence entre 5 et 130 bars, et pour alimenter le réducteur 48 à une pression d'huile comprise entre 2 et 50 bars, et de préférence entre 5 et 20 bars.

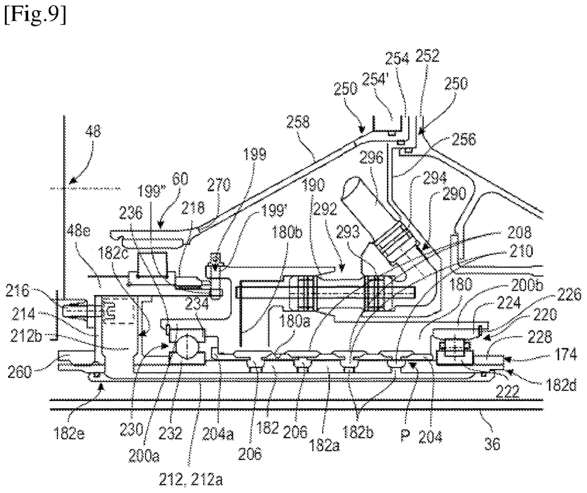

Les figures 8 et 9 illustrent une variante de réalisation d'un dispositif 174 de transfert d'huile conformément à l'invention.

Le dispositif 174 comprend les caractéristiques décrites dans ce qui précède à l'exception de celles qui sont en contradiction avec les figures 8 et 9 et ce qui suit.

L'anneau de stator 180 comporte des canalisations internes 180b d'huile qui comprennent chacune une extrémité radialement interne débouchant sur la surface 180a et une extrémité radialement externe qui forme un premier port 190 de raccordement à une douille 292 d'alimentation en huile.

Le port 190 forme une partie femelle et une extrémité de la douille 292 forme une partie mâle engagée de manière étanche dans le port 190.

Le port 190 et la douille 292 ont une orientation axiale donc la douille 292 et le port 190 sont engagés l'un dans l'autre par translation axiale.

Parmi les douilles 292 raccordées à l'anneau 180, une est représentée à la figure 9. Le nombre de douilles 292 est par exemple égal au nombre de canalisations 180b.

Les douilles 292 ont leurs extrémités axiales opposées aux ports 190 qui sont engagées axialement dans des seconds ports d'un support annulaire 250, comme cela sera décrit plus en détail dans ce qui suit.

Dans l'exemple représenté, les douilles 292 sont du type « os de chien », c'est-à-dire qu'elles ont une forme générale en os de chien. Elles ont chacune une forme allongée avec des extrémités longitudinales élargies qui portent ici des joint toriques d'étanchéité qui coopèrent avec les ports 190. L'anneau 180 comprend un orifice 199' de montage d'une goupille 199 provisoire d'immobilisation en rotation de l'anneau 180 sur l'arbre 182. Cette goupille 199 est configurée pour être engagée dans un évidement 199" du rebord 48e précité de la turbomachine lors du montage du dispositif 174 puis à être retirée après ce montage. Dans l'exemple représenté, l'orifice 199' a une orientation sensiblement radiale et est formé à la périphérie externe de l'anneau 180. L'évidement 199" est quant à lui formé par une encoche formée sur le bord aval libre du rebord 48e.

La goupille 199 comprend un corps cylindrique orienté radialement en position de montage, et relié à une tête comportant un orifice traversant d'attache d'une extrémité d'un câble (non représenté). Ce câble est utilisé par un opérateur pour tirer sur la goupille 199, la désengager de l'orifice 199' et de l'évidement 199' et la retirer de la turbomachine. La tête est reliée à l'extrémité radialement externe du corps lorsque la goupille 199 est en position de montage.

Le support annulaire 250 s'étend au moins en partie autour de l'anneau 180 et porte les douilles 292 de raccordement fluidique aux canalisations 180b de l'anneau 180. Le support 250 comprend plusieurs parois annulaires et des organes de fixation au carter 42, qui sont formés dans l'exemple représenté par des brides annulaires 252, 254.

Le support 250 est de préférence configuré pour se déformer élastiquement de façon à autoriser des déplacements du palier 60 en direction radiale. Ce support 250 est indépendant de l'anneau 180 dans la mesure où ils ne sont pas fixés rigidement l'un à l'autre.

Dans l'exemple représenté, le support 250 comprend des parois tronconiques 256, 258 dont au moins une peut être ajourée, c'est-à-dire peut comprendre des ajours traversants, de façon à réduire sa rigidité en direction radiale. Cette rigidité peut également être réduite en réduisant l'épaisseur de cette paroi.

Une première paroi tronconique 256 du support 250 s'étend sensiblement radialement et est reliée à sa périphérie externe à la bride 252 de fixation au carter 42. A sa périphérie interne, cette paroi 256 comprend des canalisations 290 intégrées comportant à chacune de ses extrémités des ports 293, 294.

Le nombre de canalisations 290 est égal au nombre de canalisations 180b de l'anneau 180. Seule une de ces canalisations 290 est visible aux figures 8 et 9. Chacune des canalisations 290 a une forme coudée dont une extrémité radialement interne est raccordée au port 293 qui s'étend axialement vers l'amont en regard d'un des ports 190 précités, afin de recevoir par engagement mâle-femelle une extrémité d'une douille 292 engagée dans ce port 190. L'extrémité radialement externe de chaque canalisation 290 est raccordée au port 294 qui s'étend radialement vers l'amont et vers l'extérieur pour recevoir par engagement mâle-femelle l'extrémité radialement interne d'une conduite 296 d'alimentation en huile.

Le support 250 comprend une deuxième paroi tronconique 258 qui s'étend radialement vers l'extérieur de l'amont vers l'aval. Cette deuxième paroi 258 comprend à sa périphérie externe la bride 254 de fixation au carter 42. La bride 254' du carter 42, qui est fixée aux brides 252, 254, s'étend dans un plan perpendiculaire à l'axe A, qui passe entre les paliers 220, 230.

La périphérie interne de la paroi 258 est située en amont de l'anneau 180 et porte la bague externe du palier 60 précité dans l'exemple représenté. Comme évoqué dans ce qui précède, le support 250 et en particulier sa paroi 258 comprend des ouvertures 270 de passage des conduites 296 d'alimentation en huile.

Chacune des canalisations 296 s'étend radialement, d'abord à travers les ouvertures 270, et d'autre part à travers des bras tubulaires 42b du carter d'entrée 42 qui sont situés dans la veine d'écoulement du flux primaire F2. Ces canalisations 296 vont ensuite traverser les aubes directrices 42a qui sont situées dans la veine d'écoulement du flux secondaire F3, pour rejoindre le système de lubrification situé dans la nacelle (voir figure 1). Une alternative consiste à monter le système de lubrification dans le moteur (entre la veine primaire - compresseurs 14 et 16) et le carter 70 de la veine secondaire, de façon à ce que ces conduites 192 ne traversent pas le flux secondaire F3.

L'invention propose en outre un procédé d'assemblage du dispositif 174, comprenant les étapes de :
a) montage de l'anneau 180 sur l'arbre 182 du dispositif 174,
b) fixation de l'arbre 182 du dispositif 174 au porte-satellites 48d du réducteur 48, et
d) déplacement en translation du réducteur 48 et du dispositif 174 vers le stator.

Le dispositif 174 se présente alors sous la forme d'une cartouche pré-assemblée. L'anneau 180 est monté de manière esclave sur l'arbre 182 ce qui permet de maîtriser et garantir le jeu du palier lisse P.

## Revendications

1. Module de soufflante pour une turbomachine d'aéronef, ce module comportant une soufflante (12) qui comporte un arbre de soufflante (46) et des aubes de soufflante (12a) à calage variable, et un dispositif (174) de transfert d'huile qui est configuré pour assurer un transfert d'huile entre un stator et un actionneur (62) qui est solidaire en rotation de l'arbre de soufflante (46) et qui est configuré pour contrôler le calage des aubes de soufflante, ce dispositif comportant :
- un anneau de stator (180) comportant une surface cylindrique interne (180a) et des canalisations internes (180b) d'huile qui débouchent chacune sur ladite surface cylindrique interne,
- un arbre (182) engagé dans ledit anneau de stator et mobile en rotation autour d'un axe (A) à l'intérieur de cet anneau, l'arbre (182) comportant une surface cylindrique externe (182a) s'étendant à l'intérieur de ladite surface cylindrique interne (180a), l'arbre (182) comportant des canalisations internes d'huile (182b) qui débouchent chacune sur ladite surface cylindrique externe (182a),
**caractérisé en ce que** lesdites surfaces cylindriques interne et externe (180a, 182a) définissent entre elles un espace annulaire qui a une épaisseur radiale comprise entre 10 et 30µm pour la formation d'un palier lisse (P), ce palier lisse s'étendant sur toute l'étendue axiale de ces surfaces (180a, 182a) et étant dépourvu d'organes d'étanchéité, et **en ce que** deux paliers à roulement (220, 230) sont montés entre l'anneau (180) et l'arbre (182), un palier à roulement (220, 230) de chaque côté du palier lisse (P), chaque palier à roulement comportant deux bagues (222, 224, 232, 234) entre lesquelles sont situés des éléments roulants, chaque palier à roulement étant monté serré en direction radiale entre l'anneau et l'arbre.

2. Module de soufflante selon la revendication 1, dans lequel les paliers à roulement (220, 230) sont à rouleaux.

3. Module de soufflante selon l'une des revendications précédentes, dans lequel l'arbre (182) et l'anneau (180) comportent chacun au moins trois ou quatre canalisations (180b, 182b) alignées les unes derrière les autres le long dudit axe (A).

4. Module de soufflante selon l'une des revendications précédentes, dans lequel chacune des canalisations (180b, 182b) débouche dans une gorge annulaire (208, 210) située sur ladite surface cylindrique interne ou externe (180a, 182a).

5. Module de soufflante selon la revendication précédente, dans lequel lesdits orifices ou lesdites gorges (208, 210) sont situés à une distance axiale les uns des autres ou les unes des autres comprise entre 15 et 35mm.

6. Module de soufflante selon l'une des revendications précédentes, dans lequel une frette (204) est montée à l'intérieur de l'anneau (180) et définie ladite surface interne (180a).

7. Module de soufflante selon l'une des revendications précédentes, dans lequel les paliers à roulement (220, 230) ont des diamètres moyens identiques.

8. Module de soufflante selon l'une des revendications précédentes, dans lequel les paliers à roulement (220, 230) ont des diamètres moyens supérieurs au diamètre du palier lisse (P).

9. Module de soufflante selon la revendication 4, dans lequel les bagues (222, 224, 232, 234) des paliers à roulement (220, 230) ont des diamètres internes identiques.

10. Module de soufflante selon l'une des revendications précédentes, dans lequel la soufflante (12) est entrainée en rotation par un réducteur (48), ledit dispositif (174) étant monté en aval du réducteur et étant configuré pour alimenter en huile le réducteur (48) ainsi que l'actionneur par des conduites (212) traversant le réducteur.

11. Procédé d'assemblage d'un module de soufflante selon la revendication précédente, comprenant les étapes de :
a) montage de l'anneau (180) sur l'arbre (182) du dispositif (174),
b) fixation de l'arbre (182) du dispositif (174) à un porte-satellites (48d) du réducteur (48), et
d) déplacement en translation du réducteur (48) et du dispositif (174) vers le stator.

## Patentansprüche

1. Gebläsemodul für ein Turbotriebwerk eines Luftfahrzeugs, wobei dieses Modul ein Gebläse (12) umfasst, das eine Gebläsewelle (46) und Gebläseschaufeln (12a) mit variabler Feststellposition und eine Vorrichtung (174) zum Transferieren von Öl umfasst, die konfiguriert ist, um einen Transfer von Öl zwischen einem Stator und einem Aktuator (62) sicherzustellen, der mit der Gebläsewelle (46) drehfest ist und der konfiguriert ist, um die Feststellposition der Gebläseschaufeln zu steuern, wobei diese Vorrichtung umfasst:
- einen Statorring (180), umfassend eine interne zylindrische Oberfläche (180a) und interne Ölkanäle (180b), die jeweils auf der internen zylindrischen Oberfläche münden,
- eine in dem Statorring in Eingriff stehende und um eine Achse (A) im Inneren dieses Rings herum drehbewegliche Welle (182), wobei die Welle (182) eine externe zylindrische Oberfläche (182a) umfasst, die sich im Inneren der internen zylindrischen Oberfläche (180a) erstreckt, wobei die Welle (182) interne Ölkanäle (182b) umfasst, die jeweils auf der externen zylindrischen Oberfläche (182a) münden,
**dadurch gekennzeichnet, dass** die interne und externe zylindrische Oberfläche (180a, 182a) zwischen ihnen einen ringförmigen Raum definieren, der eine radiale Dicke zwischen 10 und 30 µm zur Bildung eines Gleitlagers (P) definiert, wobei dieses Gleitlager sich über die gesamte axiale Erstreckung dieser Oberflächen (180a, 182a) erstreckt und frei von Dichtungselementen ist,
und dadurch, dass zwei Wälzlager (220, 230) zwischen dem Ring (180) und der Welle (182) montiert sind, ein Wälzlager (220, 230) an jeder Seite des Gleitlagers (P), wobei jedes Wälzlager zwei Dichtungsringe (222, 224, 232, 234) umfasst, zwischen denen sich die Wälzkörper befinden, wobei jedes Wälzlager in radialer Richtung zwischen dem Ring und der Welle straff montiert ist.

2. Gebläsemodul nach Anspruch 1, wobei die Wälzlager (220, 230) mit Rollen sind.

3. Gebläsemodul nach einem der vorstehenden Ansprüche, wobei die Welle (182) und der Ring (180) jeweils mindestens drei oder vier Kanäle (180b, 182b) umfassen, die entlang der Achse (A) hintereinander ausgerichtet sind.

4. Gebläsemodul nach einem der vorstehenden Ansprüche, wobei jeder der Kanäle (180b, 182b) in einer ringförmigen Nut (208, 210) mündet, die sich auf der internen oder externen zylindrischen Oberfläche (180a, 182a) befindet.

5. Gebläsemodul nach dem vorstehenden Anspruch, wobei die Öffnungen oder die Nuten (208, 210) sich in einem axialen Abstand zwischen 15 und 35 mm voneinander befinden.

6. Gebläsemodul nach einem der vorstehenden Ansprüche, wobei ein Schrumpfring (204) im Inneren des Rings (180) montiert ist und die interne Oberfläche (180a) definiert.

7. Gebläsemodul nach einem der vorstehenden Ansprüche, wobei die Wälzlager (220, 230) identische mittlere Durchmesser aufweisen.

8. Gebläsemodul nach einem der vorstehenden Ansprüche, wobei die Wälzlager (220, 230) größere mittlere Durchmesser aufweisen als der Durchmesser des Gleitlagers (P).

9. Gebläsemodul nach Anspruch 4, wobei die Dichtungsringe (222, 224, 232, 234) der Wälzlager (220, 230) identische interne Durchmesser aufweisen.

10. Gebläsemodul nach einem der vorstehenden Ansprüche, wobei das Gebläse (12) durch ein Getriebe (48) in Drehung versetzt wird, wobei die Vorrichtung (174) dem Getriebe nachgelagert montiert ist und konfiguriert ist, um dem Getriebe (48) sowie dem Aktuator durch die Leitungen (212), die das Getriebe durchqueren, Öl zuzuführen.

11. Verfahren zum Zusammenbau eines Gebläsemoduls nach dem vorstehenden Anspruch, beinhaltend die Schritte:
a) Montage des Rings (180) auf der Welle (182) der Vorrichtung (174),
b) Befestigung der Welle (182) der Vorrichtung (174) an einem Satelittenträger (48d) des Getriebes (48) und
d) translatorische Verschiebung des Getriebes (48) und der Vorrichtung (174) in Richtung des Stators.

## Claims

1. A fan module for an aircraft turbine engine, this module comprising a fan (12) that comprises a fan shaft (46) and variable pitch fan vanes (12a), and an oil transfer device (174) that is configured to ensure a transfer of oil between a stator and an actuator (62) that is secured in rotation to the fan shaft (46) and that is configured to control the pitch of the fan vanes, this device comprising:
- a stator annulus (180) comprising an internal cylindrical surface (180a) and internal oil pipes (180b) each opening onto said internal cylindrical surface,
- a shaft (182) engaged in said stator annulus and movable in rotation about an axis (A) inside this annulus, the shaft (182) comprising an external cylindrical surface (182a) extending inside said internal cylindrical surface (180a), the shaft (182) comprising internal oil pipes (182b) which each open onto said external cylindrical surface (182a),
**characterised in that** said internal and external cylindrical surfaces (180a, 182a) define between them an annular space which has a radial thickness of between 10 and 30µm for the formation of a plain bearing (P), this plain bearing extending over the entire axial extent of these surfaces (180a, 182a) and being devoid of sealing members,
and **in that** two rolling bearings (220, 230) are mounted between the annulus (180) and the shaft (182), a rolling bearing (220, 230) on each side of the plain bearing (P), each rolling bearing comprising two rings (222, 224, 232, 234) between which rolling elements are located, each rolling bearing being mounted clamped in the radial direction between the annulus and the shaft.

2. The fan module according to claim 1, wherein the rolling bearings (220, 230) are with roller.

3. The fan module according to one of the preceding claims, wherein the shaft (182) and the annulus (180) each comprise at least three or four pipes (180b, 182b) aligned one behind the other along said axis (A).

4. The fan module according to one of the preceding claims, wherein each of the pipes (180b, 182b) opens into an annular gorge (208, 210) located on said internal or external cylindrical surface (180a, 182a).

5. The fan module according to the preceding claim, wherein said orifices or said gorges (208, 210) are located at an axial distance from each other of between 15 and 35mm.

6. The fan module according to one of the preceding claims, wherein a shrink ring (204) is mounted inside the annulus (180) and defines said internal surface (180a).

7. The fan module according to one of the preceding claims, wherein the rolling bearings (220, 230) have identical mean diameters.

8. The fan module according to one of the preceding claims, wherein the rolling bearings (220, 230) have average diameters greater than the diameter of the plain bearing (P).

9. The fan module according to claim 4, wherein the rings (222, 224, 232, 234) of the rolling bearings (220, 230) have identical internal diameters.

10. The fan module according to one of the preceding claims, wherein the fan (12) is driven in rotation by a reducer (48), said device (174) being mounted downstream of the reducer and being configured to supply oil to the reducer (48) and to the actuator by conduits (212) passing through the reducer.

11. A method for assembling a fan module according to the preceding claim, comprising the steps of:
a) mounting the annulus (180) on the shaft (182) of the device (174),
b) attaching the shaft (182) of the device (174) to a planet carrier (48d) of the reducer (48), and
c) displacing in translation the reducer (48) and the device (174) towards the stator.
